(19) Europäisches Patentamt
European Patent Office
Office européen des brevets

(11) **EP 3 855 141 A1**

(12) **EUROPEAN PATENT APPLICATION**

(43) Date of publication:
**28.07.2021 Bulletin 2021/30**

(21) Application number: **20153292.6**

(22) Date of filing: **23.01.2020**

(51) Int Cl.:
*G01J 5/06* (2006.01)  *G01J 5/02* (2006.01)
*G01J 5/00* (2006.01)  *G01J 5/20* (2006.01)
*A62B 18/00* (2006.01)  *G01K 1/20* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AG Eindhoven (NL)**

(72) Inventors:
• **CAO, Xue Ming
5656 AE Eindhoven (NL)**

• **KONG, Tao
5656 AE Eindhoven (NL)**
• **GU, Wale
5656 AE Eindhoven (NL)**
• **CHEN, Weizhong
5656 AE Eindhoven (NL)**

(74) Representative: **Philips Intellectual Property &
Standards
High Tech Campus 5
5656 AE Eindhoven (NL)**

(54) **METHOD, APPARATUS FOR TERMPERATURE DETECTION AND WEARABLE DEVICE**

(57) Embodiments of the present disclosure provide a method for temperature detection. The method comprises obtaining a sensed temperature from a sensor, the sensor being in a mounted mode where the sensor is thermally radiated by a variable heat source and a fixed heat source; determining a temperature change rate of the sensor and at least one affecting factor that affects temperature sensing of the sensor; and determining a temperature of the variable heat source based on the sensed temperature, the temperature change rate, and the affecting factor. According to the method of the present disclosure, the temperature of the variable heat source such as an ambient temperature can be obtained or determined without a dedicated sensor and cables. With this method, the ambient temperature can be determined by a sensor for sensing a temperature of a heating element such as a battery, a control unit or the like. In this way, extra spaces and product designs for mounting a dedicated sensor for the ambient temperature are no longer needed, which reduces costs of the product. Furthermore, user experience can be improved without increasing costs.

FIG. 1

EP 3 855 141 A1

**Description**

FIELD OF THE INVENTION

Embodiments of the present disclosure generally relate to a wearable device, and more specifically, to a method and an apparatus for temperature detection.

BACKGROUND OF THE INVENTION

Ambient temperature is a physical quantity used to indicate the degree of a hot and cold environment. It is important to monitor the ambient temperature in some cases, especially for perception related products. Based on the ambient temperature, the products could adjust their performances so users can be more comfortable when using the same products at different temperatures. One example is an active mask with a fan to take away the exhaust gases inside the mask. At different temperatures, the requirement for the fan speed is different. For example, in summer when the ambient temperature is high, users typically prefer a higher fan speed to discharge the exhaust gas away together with the heat inside the mask more quickly. In winter when the ambient temperature is low, it is better for the fan to have a lower speed to keep heat inside the mask.

To monitor the ambient temperature, typically a dedicated temperature sensor is provided at the outside layer of a product. Consequently, dedicated cables are necessary for communication between this sensor and, for example, a control unit or a transmission unit. The main problems that follow are extra spaces required for the sensor and cables, and a product design that must be changed, resulting in increased costs. Furthermore, due to the proximity to heat sources such as the human body, the sensed ambient temperature is less accurate.

SUMMARY OF THE INVENTION

Embodiments of the present disclosure provide an apparatus and a method for temperature detection.

In a first aspect, a method for temperature detection is provided. The method comprises obtaining a sensed temperature from a sensor, the sensor being in a mounted mode where the sensor is thermally radiated by a variable heat source and a fixed heat source; determining a temperature change rate of the sensor and at least one affecting factor that affects temperature sensing of the sensor; and determining a temperature of the variable heat source based on the sensed temperature, the temperature change rate, and the at least one affecting factor.

According to the method of the present disclosure, the temperature of the variable heat source such as an ambient temperature can be obtained or determined without a dedicated sensor and cables. With this method, the ambient temperature can be determined by a sensor for sensing a temperature of a heating element such as a battery, a control unit or the like. In this way, extra spaces and product designs for mounting a dedicated sensor for the ambient temperature are no longer needed, which reduces costs of the product. Furthermore, user experience can be improved without increasing costs.

In some embodiments, the at least one affecting factor comprises at least one of the following: a first affecting factor that affects the temperature change rate, a second affecting factor that affects the sensed temperature, and a third affecting factor that affects an intermediate temperature determined based on the sensed temperature and the temperature change rate. In this way, the determined temperature of the variable heat source can be more accurate.

In some embodiments, determining the the at least one affecting factor comprises: determining the first affecting factor at least based on a power generated by an active component on a printed circuit board where the sensor is mounted, and a first equivalent thermal conductivity around the sensor. With this step, the first affecting factor associated with the temperature change rate can be determined accurately.

In some embodiments, determining the at least one affecting factor comprises: determining the second affecting factor at least based on a power generated by an active component on a printed circuit board where the sensor is mounted, and a second equivalent thermal conductivity around the sensor. In this way, the second affecting factor associated with the sensed temperature can be determined accurately.

In some embodiments, determining the at least one affecting factor comprises: determining the third affecting factor at least based on a temperature of the fixed heat source, a power generated by an active component on a printed circuit board where the sensor is mounted, and a third equivalent thermal conductivity around the sensor. This step provides a more accurate third affecting factor.

In some embodiments, determining the temperature change rate comprises: obtaining a plurality of historical temperatures sensed by the sensor over a period of time; and determining the change rate based on the plurality of historical temperatures and the period of time. As a result, the temperature change rate can be determined easily.

In some embodiments, determining the at least one affecting factor comprises: obtaining a plurality of temperatures of the variable heat source which are sensed by a further sensor over a plurality of predetermined periods of time;

obtaining a start temperature and an end temperature sensed by the sensor for a predefined time slot within each of the plurality of predetermined periods of time; and determining the at least one affecting factor at least based on the plurality of temperatures of the variable heat source. In this way, the determination of the affecting factor is made easier.

In some embodiments, the plurality of temperatures of the variable heat source are different. This arrangement can ensure the determination of the affecting factor. In a second aspect, an apparatus for temperature detection is provided. The method comprises a sensor adapted to be arranged in a mounted mode where the sensor is thermally radiated by a variable heat source and a fixed heat source; and a processor coupled to the sensor and configured to perform a method of any of claims 1-8 to determine a temperature of the variable heat source.

In some embodiments, the apparatus further comprises a printed circuit board adapted to carry the sensor.

In some embodiments, the apparatus is adapted to be arranged on a wearable device and to determine a temperature of a physical environment serving as the variable heat source when the wearable device is worn by a constant temperature object serving as the fixed heat source.

In a third aspect, a wearable device is provided. The wearable device comprises an apparatus for temperature detection as mentioned in the above second aspect adapted to determine a temperature of a physical environment around the constant temperature object.

In some embodiments, the apparatus is arranged on a side of the wearable device adjacent to the constant temperature object.

In some embodiments, the apparatus is configured such that a sensor of the apparatus is thermally radiated by the physical environment and the constant temperature object, in a case where the wearable device is worn on the constant temperature object.

In some embodiments, the wearable device further comprises a mask.

It is to be understood that the Summary is not intended to identify key or essential features of embodiments of the present disclosure, nor is it intended to be used to limit the scope of the present disclosure. Other features of the present disclosure will become easily comprehensible through the description below.

BRIEF DESCRIPTION OF THE DRAWINGS

The above and other objectives, features and advantages of the present disclosure will become more apparent through a more detailed depiction of example embodiments of the present disclosure in conjunction with the accompanying drawings, wherein in the example embodiments of the present disclosure, same reference numerals usually represent the same components.

FIG. 1 shows a schematic diagram illustrating an example application of the method according to embodiments of the present disclosure;

FIG. 2 shows a flowchart illustrating a method for temperature detection according to embodiments of the present disclosure; and

FIG. 3 shows a graph of temperature over time for a variable heat source according to embodiments of the present disclosure.

Throughout the drawings, the same or similar reference symbols are used to indicate the same or similar elements.

DETAILED DESCRIPTION

The present disclosure will now be discussed with reference to several example embodiments. It is to be understood these embodiments are discussed only for the purpose of enabling those skilled persons in the art to better understand and thus implement the present disclosure, rather than suggesting any limitations on the scope of the subject matter.

As used herein, the term "comprises" and its variants are to be read as open terms that mean "comprises, but is not limited to." The term "based on" is to be read as "based at least in part on." The term "one embodiment" and "an embodiment" are to be read as "at least one embodiment." The term "another embodiment" is to be read as "at least one other embodiment." The terms "first," "second," and the like may refer to different or same objects. Other definitions, explicit and implicit, may be comprised below. A definition of a term is consistent throughout the description unless the context clearly indicates otherwise.

With the development of technology, requirements for smart wearable devices such as clothes or masks are increasing. For example, an active mask with a fan has been developed to take away the exhaust gases inside a mask to improve the user's experience. In some cases, the fan speed can be adjusted according to ambient temperature. Specifically, in summer when the ambient temperature is high, users prefer a higher fan speed to discharge the exhaust gas away together with the heat inside the mask more quickly. In winter when the ambient temperature is low, it is better for the fan to have a lower speed to keep heat inside the mask.

The above example scenario requires monitoring of the ambient temperature. Actually, it is important to monitor the ambient temperature in some cases, especially for perception related products. Based on the ambient temperature, the products could adjust their performance so users can be more comfortable when using the same products at different temperatures.

Conventionally, typically a dedicated temperature sensor is provided at the outside layer of a product to monitor the ambient temperature. In addition, dedicated cables are necessary for communication between this sensor and a control unit or a transmission unit, for example. It will be appreciated that extra spaces are required for the sensor and cables, which will result in increased costs and a need for product redesign. It is also typical to set up a dedicated sensor, but due to proximity to heat sources such as a human body, the sensed ambient temperature is less accurate.

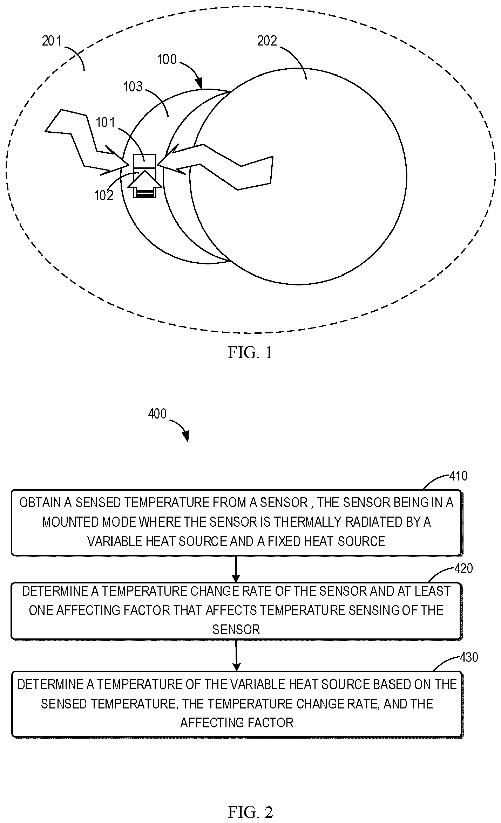

Embodiments of the present disclosure provide an apparatus 100 and method for measuring the ambient temperature. FIG. 1 shows a schematic diagram illustrating an example application of the method and the apparatus according to embodiments of the present disclosure.

According to embodiments of the present disclosure, the ambient temperature around the apparatus 100 can be determined with a sensor 101 used for safety. For example, in some embodiments, the sensor 101 may be used to measure a temperature of a heating source such as a battery or a control unit. It is to be understood that the above scenario where the ambient temperature can be determined is merely for illustrative purposes, without suggesting any limitation as to the scope of the present disclosure. The temperature of any variable heat source also can be determined as long as the sensor 101 is thermally radiated by the variable heat source 201 and a fixed heat source 202.

As shown in FIG. 1, the sensor 101 is thermally radiated by the variable heat source 201, the fixed heat source 202, and a printed circuit board (PCB) 102 where the sensor 101 is mounted. Examples of the heating source include, but are not limited to, a battery, a control unit, a processor, or the like. It is to be understood that the PCB 102 is discussed only for illustrative purposes, without suggesting any limitation as to the scope of the present disclosure. In some embodiments, the PCB 102 can be omitted or refer to an integrated circuit of the sensor 101. That is, the sensor 101 may also be arranged in the apparatus 100 without a PCB.

It is also to be understood that the sensor 101 may be any kind of sensor used for safety or other situations, as long as the sensor 101 can be thermally radiated by fixed and variable heat sources 202 when in the mounted mode. For example, in some embodiments, the sensor 101 may be a thermistor.

The variable heat source 201 is any object that radiates heat that varies over time. An example of the variable heat source 201 is the physical environment around the apparatus 100. In this situation, the temperature of the variable heat source 201 to be determined is the ambient temperature. The fixed heat source 202 means any object that radiates heat constantly. Examples of the fixed heat source 202 may be a human body or other objects or heated bodies that constantly radiate heat.

For ease of discussion, the physical environment around the apparatus 100 and a human body will correspond to the variable heat source 201 and the fixed heat source 202, respectively. It is to be understood that this is merely for illustrative purposes, without suggesting any limitation as to the scope of the present disclosure. Temperatures of any other suitable variable heat source 201 may also be determined according to embodiments of the present disclosure, as long as the sensor 101 is thermally radiated by the fixed heat source 202 and the variable heat source 201.

For example, in some alternative embodiments, the variable heat source may comprise, but is not limited to, heated objects operating at variable power such as a computer, household appliances, or the like. The fixed heat source may comprise heated objects operating at fixed power, such as an incandescent lamp.

Furthermore, it is to be understood that the mounted mode means that the apparatus 100 is mounted where it is needed or should be mounted. Take a mask as an example, the mounted mode means that the mask is worn on the user's face. In this way, the temperature of the fixed heat source 202 remains constant regardless of the ambient temperature, resulting in a more accurate determination of the ambient temperature serving as the variable heat source 201.

As mentioned above, the sensor 101 is used to sense the temperature of some heating sources. For example, in some embodiments, the sensor 101 is used to monitor the failure of a battery. In case of the failure of the battery, its temperature would increase quickly, resulting in a quick change of sensed temperature. When the sensed temperature exceeds a predetermined threshold, an alarm or protection may be triggered.

Conventionally, in a normal state of the battery, the data from the sensor 101 is typically neglected. After research, the inventors developed the method and apparatus 100 according to embodiments of the present application, to use this neglected data to determine the ambient temperature, without dedicated sensors. The development of the method is based on a transient thermal balance equation.

Typically, according to the transient thermal balance equation, we can obtain the heat flux density with the equation below:

$$q = -\lambda \cdot \nabla \mathrm{T} \quad (1),$$

where q represents the local heat flux density with a unit of $W/m^2$, $\lambda$ represents a thermal conductivity of the heat transfer medium, and $\nabla$T represents a temperature gradient. It can be seen that there is a linear relationship between the energy received and the temperature increase in the sensor 101.

The inventors have found that the temperature change of the sensor 101 is affected by a temperature of a human body or a portion thereof such as a user's face, the ambient temperature, and the power generated by active components of the PCB (if any). Specifically, in the case where the mask is in the mounted mode, the heat transfer medium between the human body and the sensor 101 and between the physical environment around the mask and the sensor 101 typically remains substantively unchanged.

For example, the heat transfer medium between the human body and the sensor 101 may comprise air inside the mask, a housing of the sensor 101 and an inner layer of the mask. Since materials and arrangements of the above objects when the mask is worn on a human body are invariant, for the sake of simplicity, these materials along with their arrangements may be equivalent to a virtual material with an equivalent heat transfer conductivity. This equivalent heat transfer conductivity is used to determine the temperature change rate of the sensor 101, which will be discussed further below.

Similarly, the heat transfer medium between the physical environment around the mask and the sensor 101 may also be equivalent to a virtual material with a further equivalent heat transfer conductivity. This equivalent heat transfer conductivity is also used to determine the temperature change rate of the sensor 101.

Regarding the power generated by active components of the PCB as mentioned above, after analysis, the inventors have found that the power generated by active components of the PCB substantially contributes to the physical environment, to the human body and to other areas on the PCB where the sensor 101 is mounted. Depending on the different heat transfer conductivity for the above three ways, the power generated by the active components contributes to the sensor 101 more quickly than to the environment and to the human body.

By assuming that the power generated by the active components on the PCB has a constant temperature contribution in the dimensional space, we can determine the power contributed to the sensor 101 by subtracting the part of the power contributed to the environment and the human body. The part of the power distributed to the environment and the human body is associated with differences between the temperatures of the PCB and the faces, and between the temperature of the PCB and the ambient temperature.

As for the temperature of the PCB, it has been found through research that the temperature of the PCB has a linear relationship with the sensed temperature of the sensor 101. Consequently, the temperature of PCB can be expressed by an equivalent temperature, which is determined by multiplying the sensed temperature by a factor.

By performing the above analyses on the factors that affect the sensor temperature change, a relationship between the ambient temperature, a temperature change rate of the sensor 101, and the sensed temperature can be determined. With the determined relationship, the ambient temperature can be determined based on the sensed temperature, the temperature change rate, and affecting factors.

In the above mentioned relationship, the sensed temperature can be obtained from the sensor 101, and the temperature change rate of the sensor 101 can be determined from the sensed temperature that has been obtained. Furthermore, the affecting factors are constants, which can be obtained or determined by various ways, which will be discussed further below. That is, with the above relationship, the ambient temperature can be determined by using the sensed temperature from the sensor 101 and some constants.

Through the above analyses, the inventors have developed a method for determining the temperature of a variable heat source from the sensor 101 in the mounted mode where the sensor 101 is thermally radiated by the variable and fixed heat sources. FIG. 2 shows a flowchart illustrating the method for temperature detection according to embodiments of the present disclosure.

As shown, in block 410, a sensed temperature is obtained from the sensor 101. After several historical temperatures sensed by the sensor 101 over a period of time are obtained, the temperature change rate of the sensor 101 can be determined, as shown in block 420. That is, in some embodiments, the temperature change rate may be determined based on the historical temperatures over the period of the time. In some alternative embodiments, the temperature change rate may also be determined directly from the sensor 101.

In the meantime, as shown in block 420, at least one affecting factor that affects the temperature sensing of the sensor 101 can be determined. The at least one affecting factor is associated with the parameters including, but not limited to, the equivalent thermal conductivities around the sensor, power generated by active components on the PCB, and the temperature of the fixed heat source. For the same batch of the masks, for example, the affecting factors are constants and may be built into a processor or a control unit in advance.

In some embodiments, the at least one affecting factor may be determined based on the above parameters. For example, after the above parameters are obtained by various means, the affecting factor can be determined according to the relationship between the parameters and the affecting factor. In some alternative embodiments, the at least one affecting factor may also be determined by calibration, which will be discussed further below.

After the temperature change rate of the sensor 101 and the affecting factors are determined, in block 430, the temperature of the variable heat source 201, i.e., the ambient temperature in some embodiments, can be determined based on the sensed temperature, the temperature change rate, and the affecting factors.

According to embodiments of the present disclosure, the temperature of the variable heat source 201 such as ambient temperature can be obtained or determined without a dedicated sensor and cables. For example, in some embodiments, the ambient temperature can be determined by a sensor 101 for other purposes such as safety, better temperature monitoring, or the like. In this way, extra spaces and product redesigns for mounting a dedicated sensor to the product are no longer needed, which reduces the cost of the product. Furthermore, user experience can be improved without increasing costs.

In the following, a wearable device is taken as an example to describe how to determine the at least one impact factor. For the embodiments where the apparatus 100 comprises a wearable device such as a mask, after research, the at least one affecting factor comprises three affecting factors. For ease of discussion, the three affecting factors will be referred to as first, second and third affecting factors, respectively. Specifically, the first affecting factor is a factor affecting the temperature change rate, the second affecting factor affects the sensed temperature, and the third affecting factor affects an intermediate temperature determined based on the sensed temperature and the temperature change rate.

As mentioned above, in some embodiments, the affecting factors are associated with the parameters including, but not limited to, the equivalent thermal conductivities around the sensor, power generated by active components on the PCB, and the temperature of the fixed heat source 202, i.e., a human body. Consequently, the three affecting factors may be determined based on the above parameters.

Specifically, after analyses, the inventors have found that, in some embodiments, the first affecting factor may be determined at least based on the power generated by the active components on the PCB and an equivalent thermal conductivity around the sensor, which is referred to as a first equivalent thermal conductivity for ease of discussion. The first equivalent thermal conductivity may be associated with an equivalent thermal conductivity from the physical environment to the sensor 101, and an equivalent thermal conductivity from the PCB to the environment.

As for the second affecting factor, in some embodiments, the second affecting factor may be determined at least based on the power generated by active components on the PCB, and a second equivalent thermal conductivity around the sensor 101. The second equivalent thermal conductivity may be associated with an equivalent thermal conductivity from the variable heat source 201 to the sensor 101, an equivalent thermal conductivity from the PCB to the variable heat source 201, an equivalent thermal conductivity from the fixed heat source 202 to the sensor 101, and an equivalent thermal conductivity from the PCB to the fixed heat source 202.

As for the third affecting factor, in some embodiments, the third affecting factor may be determined at least based on the temperature of the fixed heat source 202, the power generated by the active components on the PCB, and a third equivalent thermal conductivity around the sensor 101. The third equivalent thermal conductivity may be associated with an equivalent thermal conductivity from the variable heat source 201 to the sensor 101, an equivalent thermal conductivity from the PCB to the variable heat source 201, an equivalent thermal conductivity from the fixed heat source 202 to the sensor 101, and an equivalent thermal conductivity from the PCB to the fixed heat source 202.

It can be seen from the above that in some embodiments, the affecting factors may be determined at least based on, for example, thermal conductivities around the sensors 101, the temperature of the fixed heat source, and the power generated by the active components. For example, in the case of masks, the above parameters are relatively constant for the same batch of the masks. As a result, the first, second, and third affecting factors are constant.

It is to be understood that the above embodiments where the affecting factors may be determined based on the above mentioned parameters are merely for illustrative purpose, without suggesting any limitations as to the scope of the present disclosure. The affecting factors may also be determined in other suitable ways.

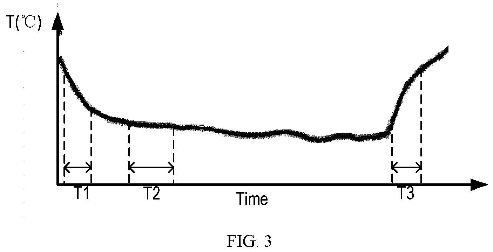

For example, in some alternative embodiments, the affecting factors may also be determined by calibration. "Calibration" means that the affecting factors can be determined in the case where the temperature of the variable heat source 201 and the sensed temperature of the sensor 101 are known. Specifically, to determine or calibrate the affecting factors, a plurality of temperatures of the variable heat source 201, i.e., the ambient temperature may be obtained with a further sensor over a plurality of predetermined periods of time T1, T2 and T3, as shown in FIG. 3.

In the meantime, a start temperature and an end temperature sensed by the sensor 101 for a predefined time slot within each of the plurality of predetermined periods of times T1, T2, and T3 are obtained. After that, affecting factors can be determined or calibrated at least based on the plurality of temperatures of the variable heat source 201.

The method of determining or calibrating the affecting factors will be described below with reference to FIG. 3 by way of example. Specifically, to accomplish the above determination or calibration, one person wearing a mask with the sensor 101 inside stands and walks inside a room (T=~-6°C) for 75 minutes first, then goes to the outside (T=~20°C) to stand and walk for 16 minutes. During these periods, the ambient temperature is obtained from a further sensor, for example, a common thermometer.

The sensed temperatures by the sensor 101 inside the mask with respect to the predetermined periods of time are shown in FIG. 3. It is obvious that the sensed temperature by the sensor 101 cannot reflect the ambient temperature directly. Because three affecting factors are to be determined for the case of masks, three periods of time T1, T2, T3 are chosen to determine the affecting factors. Furthermore, as shown in FIG. 3, durations of the three periods of time T1, T2, T3 may be different. During the three periods of time, the ambient temperature, the start and end temperatures and the time are obtained and recorded, as shown in Table 1 below. In some embodiments, the ambient temperatures in Table 1 are averages of the ambient temperatures sensed by the common thermometer during a predetermined period of time, for example, 60 seconds.

Table 1

|  | T1 | | T2 | | T3 | |
|---|---|---|---|---|---|---|
| Ambient T (°C) | -6 | | -6 | | 20 | |
|  | Start T. | End T. | Start T. | End T. | Start T. | End T. |
| Time (0.1s) | 1026 | 2130 | 12081 | 15257 | 46001 | 47005 |
| Sensed T(°C) | 19.76 | 17.34 | 10.65 | 10.42 | 11.55 | 14.92 |

From the above data as listed in Table 1, the affecting factors, i.e., the first, second and third affecting factors can be determined by three ternary linear equations. As can be seen from the above Table 1, to ensure the determination of the affecting factors with the above methods, in some embodiments, the plurality of the temperatures of the variable heat source 201 to be sensed by the further sensor are different. In some embodiments, the term "different" means that the temperatures of the variable heat source 201 in the different predetermined periods of time are different. In some embodiments, alternatively or additionally, the term "different" may also mean that the temperatures of the variable heat source 201 in one predetermined period of time are different or changed.

It can be seen from the above that according to embodiments of the present disclosure, temperatures during merely three periods of time are needed to determine the affecting factors. This greatly reduces efforts required to determine parameters as mentioned above and the affecting factors, and improves product development efficiency.

Furthermore, taking into account the instability of the sensor at the beginning of measurement, the predefined time slot when the start and end temperatures are obtained is arranged in the middle of the predetermined periods of time. In this way, the determined affecting factor can be more accurate.

In some embodiments, after the affecting factors are determined through the various methods described above, the determined affecting factors may be built in a processer or a control unit or memory of the apparatus 100. When a user wears an active mask with the apparatus 100, the ambient temperature may be determined based on the sensed temperature, the temperature change rate of the sensor 101 and the determined affecting factors.

In this way, for the active mask, the fan speed can be adjusted according to the above determined ambient temperature, without any need for dedicated sensors. As a result, the costs for the active mask are reduced while improving the user's experience.

According to another aspect of the present disclosure, the apparatus 100 for temperature detection is provided. Generally, the apparatus 100 comprises a sensor 101 and a processor coupled to the sensor 101. As mentioned above, the sensor 101 is thermally radiated by the variable heat source 201 and a fixed heat source 202 when in the mounted mode, as shown in FIG. 1. The processor can perform steps of the method as mentioned above to determine the temperature of the variable heat source 201.

In some embodiments, the apparatus 100 may be arranged in a wearable device such as a mask. When the wearable device is worn by a constant temperature object such as a human body serving as the fixed heat source, the temperature of a physical environment serving as the variable heat source 201 can be determined.

According to yet another aspect of the present disclosure, a wearable device is provided. The wearable device comprises the apparatus 100, as mentioned above. In some embodiments, the apparatus 100 may be arranged on a side of the wearable device adjacent to the constant temperature object such as a human body. In this way, the temperature of the constant temperature object inside the wearable device can be more constant, resulting in a more accurate determination of the ambient temperature.

It should be appreciated that the above detailed embodiments of the present disclosure are only to exemplify or explain principles of the present disclosure and not to limit the present disclosure. Therefore, any modifications, equivalent alternatives and improvements, etc. without departing from the spirit and scope of the present disclosure shall be comprised in the scope of protection of the present disclosure. Meanwhile, appended claims of the present disclosure aim to cover all the variations and modifications falling under the scope and boundary of the claims or equivalents of the scope and boundary.

**Claims**

1. A method for temperature detection, comprising:

   obtaining a sensed temperature from a sensor (101), the sensor (101) being in a mounted mode where the sensor (101) is thermally radiated by a variable heat source (201) and a fixed heat source (202);
   determining a temperature change rate of the sensor (101) and at least one affecting factor that affects temperature sensing of the sensor (101); and
   determining a temperature of the variable heat source based on the sensed temperature, the temperature change rate, and the at least one affecting factor.

2. The method of claim 1, wherein the at least one affecting factor comprises at least one of the following:

   a first affecting factor that affects the temperature change rate,
   a second affecting factor that affects the sensed temperature, and
   a third affecting factor that affects an intermediate temperature determined based on the sensed temperature and the temperature change rate.

3. The method of claim 2, wherein determining the at least one affecting factor comprises:
   determining the first affecting factor at least based on a power generated by an active component on a printed circuit board (PCB) where the sensor (101) is mounted, and a first equivalent thermal conductivity around the sensor (101).

4. The method of claim 2, wherein determining the at least one affecting factor comprises:
   determining the second affecting factor at least based on a power generated by an active component on a printed circuit board (PCB) where the sensor (101) is mounted, and a second equivalent thermal conductivity around the sensor (101).

5. The method of claim 2, wherein determining the at least one affecting factor comprises:
   determining the third affecting factor at least based on a temperature of the fixed heat source (202), a power generated by an active component on a printed circuit board (PCB) where the sensor (101) is mounted, and a third equivalent thermal conductivity around the sensor (101).

6. The method of claim 1, wherein determining the temperature change rate comprises:

   obtaining a plurality of historical temperatures sensed by the sensor (101) over a period of time; and
   determining the change rate based on the plurality of historical temperatures and the period of time.

7. The method of claim 1, wherein determining the at least on affecting factor comprises:

   obtaining a plurality of temperatures of the variable heat source (201) which are sensed by a further sensor over a plurality of predetermined periods of time (T1, T2, T3);
   obtaining a start temperature and an end temperature sensed by the sensor (101) for a predefined time slot within each of the plurality of predetermined periods of time (T1, T2, T3); and
   determining the at least one affecting factor at least based on the plurality of temperatures of the variable heat source (201).

8. The method of claim 7, wherein the plurality of temperatures of the variable heat source (201) are different.

9. An apparatus for temperature detection, comprising:

   a sensor (101) adapted to be arranged in a mounted mode where the sensor (101) is thermally radiated by a variable heat source (201) and a fixed heat source (202); and
   a processor coupled to the sensor (101) and configured to perform a method of any of claims 1-8 to determine a temperature of the variable heat source (201).

10. The apparatus of claim 9, further comprising a printed circuit board (PCB) adapted to carry the sensor (101).

11. The apparatus of claim 9, wherein the apparatus is adapted to be arranged on a wearable device and to determine a temperature of a physical environment serving as the variable heat source (201) when the wearable device is worn by a constant temperature object serving as the fixed heat source (202).

12. A wearable device, comprising:
an apparatus for temperature detection of any of claims 9-11 adapted to determine a temperature of a physical environment around the constant temperature object.

13. The wearable device of claim 12, wherein the apparatus is arranged on a side of the wearable device adjacent to the constant temperature object.

14. The wearable device of claim 12, wherein the apparatus is configured such that a sensor of the apparatus is thermally radiated by the physical environment and the constant temperature object, in a case where the wearable device is worn on the constant temperature object.

15. The wearable device of claim 12, wherein the wearable device (100) further comprises a mask.

FIG. 1

FIG. 2

FIG. 3

Europäisches
Patentamt

European
Patent Office

Office européen
des brevets

**PARTIAL EUROPEAN SEARCH REPORT**

under Rule 62a and/or 63 of the European Patent Convention.
This report shall be considered, for the purposes of
subsequent proceedings, as the European search report

Application Number

EP 20 15 3292

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/321503 A1 (NIEDERBERGER DOMINIK [CH] ET AL) 30 October 2014 (2014-10-30) | 1,6,9,10 | INV.<br>G01J5/06 |
| Y | * paragraph [0020] - paragraph [0050] *<br>* figures 2-5 * | 11-15 | G01J5/02<br>G01J5/00<br>G01J5/20 |
| X | EP 2 728 327 A1 (SENSIRION AG [CH]) 7 May 2014 (2014-05-07) | 1,6,9,10 | A62B18/00<br>G01K1/20 |
| Y | * paragraph [0026] - paragraph [0052] *<br>* figures 1, 2 * | 11-15 | |
| X | US 2018/245986 A1 (PAN CHI-WEN [TW] ET AL) 30 August 2018 (2018-08-30) | 1,6,9,10 | |
| Y | * paragraph [0036] - paragraph [0039] *<br>* pages 1, 6 * | 11-15 | |
| X | EP 3 062 077 A1 (NXP BV [NL]) 31 August 2016 (2016-08-31) | 1,6,9,10 | |
| Y | * paragraph [0037] - paragraph [0081] *<br>* figures 1-5 * | 11-15 | |
| | ----- | | |
| | -/-- | | |

| TECHNICAL FIELDS SEARCHED (IPC) |
|---|
| G01K<br>A62B |

## INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| Munich | 30 October 2020 | Haller, Mirjam |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04E07)

Europäisches
Patentamt

European
Patent Office

Office européen
des brevets

**PARTIAL EUROPEAN SEARCH REPORT**

Application Number

EP 20 15 3292

| | DOCUMENTS CONSIDERED TO BE RELEVANT | | CLASSIFICATION OF THE APPLICATION (IPC) |
|---|---|---|---|
| Category | Citation of document with indication, where appropriate, of relevant passages | Relevant to claim | |
| X | US 2011/205071 A1 (NAMEKAWA KIMIYASU [JP] ET AL) 25 August 2011 (2011-08-25) | 1,6,9,10 | |
| Y | * paragraphs [0055], [0066] - [0074], [0107] * <br> * figures 4-8 * <br> ----- | 11-15 | |
| Y | WO 2019/025374 A1 (KONINKLIJKE PHILIPS NV [NL]) 7 February 2019 (2019-02-07) <br> * page 8, paragraph 20 - page 11, paragraph 25 * <br> * figures 2, 3 * <br> ----- | 11-15 | |

TECHNICAL FIELDS
SEARCHED         (IPC)

EPO FORM 1503 03.82 (P04C10)

Europäisches
Patentamt

European
Patent Office

Office européen
des brevets

**INCOMPLETE SEARCH
SHEET C**

Application Number

EP 20 15 3292

Claim(s) completely searchable:
-

Claim(s) searched incompletely:
1, 6, 9-15

Claim(s) not searched:
2-5, 7, 8

Reason for the limitation of the search:

1      Present claim 1 relates to temperature detection method, wherein the temperature of a variable heat source is determined based on a sensed temperature, a temperature change rate, and an "at least one affecting factor that affects temperature sensing of the sensor".
Given that the temperature of the variable heat source cannot be determined solely based upon the measured temperature and the temperature change rate, the selection of said "affecting factor" is a decisive feature of the claimed invention.
However, the application does not provide support and disclosure within the meaning of Articles 84 and 83 EPC for the nature and selection of said factor and there is no common general knowledge of this kind available to the person skilled in the art.
2      In fact, the determination of said factor is only very vaguely described in the description (see the description, page 9, paragr. 2): "In the meantime, as shown in block 420, at least one affecting factor that affects the temperature sensing of the sensor 101 can be determined. The at least one affecting factor is associated with the parameters including, but not limited to, the equivalent thermal conductivities around the sensor, power generated by active components on the PCB, and the temperature of the fixed heat source."
On the following pages (page 9, last paragr. - page 10, last paragr.) and in claims 2-5 the affecting factor is disclosed to actually comprise three factors, all of which are described in a very obscure manner to be "at least based on" further undefined parameters such as first, second and third equivalent thermal conductivities.
It is also completely unclear, how the various "affecting factors" are to be combined with each other, the temperature change rate and the measured temperature such as to obtain the temperature of the variable heat source. No embodiment or specific example is provided.
3      Furthermore, the expression "power generated by an active component on a printed circuit board" is unclear and no example for this is provided. It is not even clear, whether "power" is intended to refer to e.g. the electrical power of a battery or the mechanical power of a fan.
4      According to the embodiment of fig. 3. (claims 6-8) the affecting factors are determined by calibration and at least "based on the plurality of temperatures of the variable heat source" (as measured with a calibration sensor). It is unclear how exactly the affecting factors are to be determined and whether these factors are to be identified with the previously defined "three factors" or not. Again, no embodiment is provided.
5      Corresponding objections are raised with regard to claims 9-15, which are dependent on claim 1.
6      This non-compliance with the substantive provisions is such that a

Europäisches
Patentamt

European
Patent Office

Office européen
des brevets

**INCOMPLETE SEARCH
SHEET C**

Application Number

EP 20 15 3292

complete meaningful search of the whole claimed subject-matter of the claims 1-15 can not be carried out (Rule 63 EPC and Guidelines B-VIII, 3).

7    However, a incomplete search report has been drawn up on the basis of the subject-matter searched (Rule 63(2) EPC), which is what  - as far as can be understood, could reasonably be expected to be claimed later in the procedure. Claims 1, 6 and 9-15 could be partially searched interpreting the unclear feature of the "affecting factor" in a very general manner. Claims 2-5, 7 and 8 that are concerned with "affecting factors" in more detail were not searched.

## ANNEX TO THE EUROPEAN SEARCH REPORT
## ON EUROPEAN PATENT APPLICATION NO.

EP 20 15 3292

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2020

| Patent document cited in search report | | | Publication date | Patent family member(s) | | | Publication date |
|---|---|---|---|---|---|---|---|
| US 2014321503 | A1 | | 30-10-2014 | CN | 104121932 | A | 29-10-2014 |
| | | | | EP | 2796841 | A1 | 29-10-2014 |
| | | | | KR | 20140127772 | A | 04-11-2014 |
| | | | | US | 2014321503 | A1 | 30-10-2014 |
| EP 2728327 | A1 | | 07-05-2014 | CN | 104755891 | A | 01-07-2015 |
| | | | | EP | 2728327 | A1 | 07-05-2014 |
| | | | | KR | 20150079652 | A | 08-07-2015 |
| | | | | US | 2015292959 | A1 | 15-10-2015 |
| | | | | WO | 2014067022 | A1 | 08-05-2014 |
| US 2018245986 | A1 | | 30-08-2018 | CN | 108507699 | A | 07-09-2018 |
| | | | | EP | 3367209 | A2 | 29-08-2018 |
| | | | | TW | 201831869 | A | 01-09-2018 |
| | | | | US | 2018245986 | A1 | 30-08-2018 |
| | | | | US | 2020333193 | A1 | 22-10-2020 |
| EP 3062077 | A1 | | 31-08-2016 | CN | 105910723 | A | 31-08-2016 |
| | | | | EP | 3062077 | A1 | 31-08-2016 |
| | | | | US | 2016245706 | A1 | 25-08-2016 |
| US 2011205071 | A1 | | 25-08-2011 | CN | 102192795 | A | 21-09-2011 |
| | | | | JP | 2011174816 | A | 08-09-2011 |
| | | | | US | 2011205071 | A1 | 25-08-2011 |
| WO 2019025374 | A1 | | 07-02-2019 | CN | 111182946 | A | 19-05-2020 |
| | | | | EP | 3661607 | A1 | 10-06-2020 |
| | | | | WO | 2019025374 | A1 | 07-02-2019 |

EPO FORM P0459

For more details about this annex : see Official Journal of the European Patent Office, No. 12/82